# EUROPÄISCHE PATENTSCHRIFT

(11) **EP 4 282 309 B1**
(45) Veröffentlichungstag und Bekanntmachung des Hinweises auf die Patenterteilung: **29.01.2025**
(21) Anmeldenummer: 23203312.6
(22) Anmeldetag: 08.06.2018
(51) Int. Cl.: A47J 31/44, A47J 31/60, A47J 31/46

(54) **MILCHMODUL ZUR ERZEUGUNG VON MILCHSCHAUM ODER MILCHGETRÄNKEN, VORZUGSWEISE ZUM EINBAU IN EINE KAFFEEMASCHINE**
MILK MODULE FOR GENERATING MILK FOAM OR MILK BEVERAGES, PREFERABLY FOR INSTALLING INTO A COFFEE MACHINE
MODULE LAIT DESTINÉ À PRODUIRE DE LA MOUSSE DE LAIT OU DES BOISSONS LACTÉES, DE PRÉFÉRENCE DESTINÉ À UNE INSTALLATION DANS UNE MACHINE À CAFÉ

(30) Priorität: 06.07.2017 CH 8752017
(43) Veröffentlichungstag der Anmeldung: 29.11.2023
(62) Teilanmeldung aus: 18732278.9
(73) Patentinhaber: Steiner AG Weggis, 6353 Weggis (CH)
(72) Erfinder: STEINER, Adrian, 6353 Weggis (CH)
(74) Vertreter: Luchs, Willi

(56) Entgegenhaltungen:
- EP-A1- 2 078 481
- EP-A1- 2 272 409
- WO-A1-2009/004089
- CH-A1- 706 370

## Beschreibung

Die Erfindung betrifft ein Milchmodul zur Erzeugung von Milchschaum oder Milchgetränken, vorzugsweise zum Einbau in eine Kaffeemaschine nach dem Oberbegriff des Anspruchs 1.

Kaffeemaschinen mit integrierten Modulen für die Erzeugung von Milchschaum bzw. zum Aufheizen von Milch werden bekanntlich in mannigfaltigen Ausführungen gebaut. Sie ermöglichen die automatische Erzeugung sowohl von Kaffee, wie Espresso, als auch von Mischgetränken aus Kaffee mit Milch oder Milchschaum, insbesondere Cappuccino. Kaffeemaschinen sind üblicherweise mit einer Reinigungseinrichtung versehen, welche im Betrieb eine periodische Reinigung der Maschine selbsttätig bewerkstelligt. Bei kleinbauenden Kaffeemaschinen ist es für den konstruktiven Aufbau schwierig, eine solche Reinigungseinrichtung vorzusehen, weil bei dem beanspruchten Raumbedarf Grenzen gesetzt sind. Eine Kaffeemaschine mit einem Reinigungsmodul ist beispielsweise in EP2078481 A1 offenbart.

Der Erfindung liegt die Aufgabe zugrunde, diese Nachteile zu vermeiden und eine Kaffeemaschine der eingangs genannten Art zu schaffen, die bei einfachem Aufbau und leichter Handhabung die obengenannten Funktionen insbesondere betreffend die Reinigung mit möglichst reduziertem Raumbedarf ausführen kann.

Diese Aufgabe wird erfindungsgemäss nach den Merkmalen des Anspruchs 1 gelöst.

Erfindungsgemäss ist in dem Reinigungsbehälter eine Einrichtung mit einem Wasserzufuhrkanal, einer definierten Öffnung zur Aufnahme eines Reinigungsmittels und einer Auslassöffnung enthalten. Damit kann Wasser durch diesen Zufuhrkanal in diese Öffnung geleitet und darin das Reinigungsmittel aufgelöst, mit dem Wasser emulgiert und der Reinigungsbehälter damit gefüllt werden kann. Dies ermöglicht eine einfache Handhabung für das Reinigen und genaue Dosierung des Reinigungsmittels, wobei dazu insbesondere Reinigungstabletten verwendet werden sollen.

Die Erfindung sieht vor, dass der Milchbehälter bzw. der Reinigungsbehälter an den Arbeitskreislauf der Maschine mittels eines im oberen Bereich der Kühlschrankbox nach vorne bzw. nach hinten schwenkbar gelagerter und nach unten frei hängender Ansaugschlauch vorgesehen ist. Die Schwenkbarkeit des Ansaugschlauchs ermöglicht das selbständige Einführen oder Entfernen desselben aus dem Behälter, ohne dass die Bedienungsperson ihn während des Umtauschvorgangs berühren muss.

Mit Vorteil ist die Ausbildung des Milchmoduls als eine unabhängige Einheit mit diesem vorzugsweise als Steckkupplung vorgesehene Verbindungsmittel vorgesehen. Das Milchmodul kann auf einfache Weise in einem Kaffeemaschinengehäuse montiert und der Milchauslass bei dem Kaffeeauslass bewerkstelligt werden.

Mit der erfindungsgemässen Konstruktion kann eine beträchtliche Raumeinsparung erzielt werden, weil nach Entfernen des Milchbehälters aus der Kühlschrankbox der von ihm beanspruchte Einbauraum zum Unterbringen des Reinigungsbehälters verfügbar wird, so dass für letzteren kein zusätzlicher Raumbedarf nötig ist.

Die Erfindung ist nachfolgend anhand eines Ausführungsbeispiels unter Bezugnahme auf die Zeichnung näher erläutert. Es zeigen:
- Fig. 1: eine perspektivisch dargestellte Kaffeemaschine mit dem Milchmodul, wobei das Kaffeemodul nicht gezeigt ist;
- Fig. 2: eine perspektivische Seitenansicht des Milchmoduls nach Fig. 1;
- Fig. 3: einen Schnitt der Steckkupplung auf der Oberseite des Milchmoduls;
- Fig. 4: die Kühlschrankbox des Milchmoduls nach Fig. 2 vor dem Einführen eines Behälters;
- Fig. 5: die Kühlschrankbox des Milchmoduls nach Fig. 2 beim Einführen des Milchbehälters;
- Fig. 6: eine perspektivische Ansicht eines Reinigungsbehälters für das Milchmodul nach Fig. 2; und
- Fig. 7: ein Schema des hydraulischen Kreislaufs des Milchmoduls nach Fig. 2.

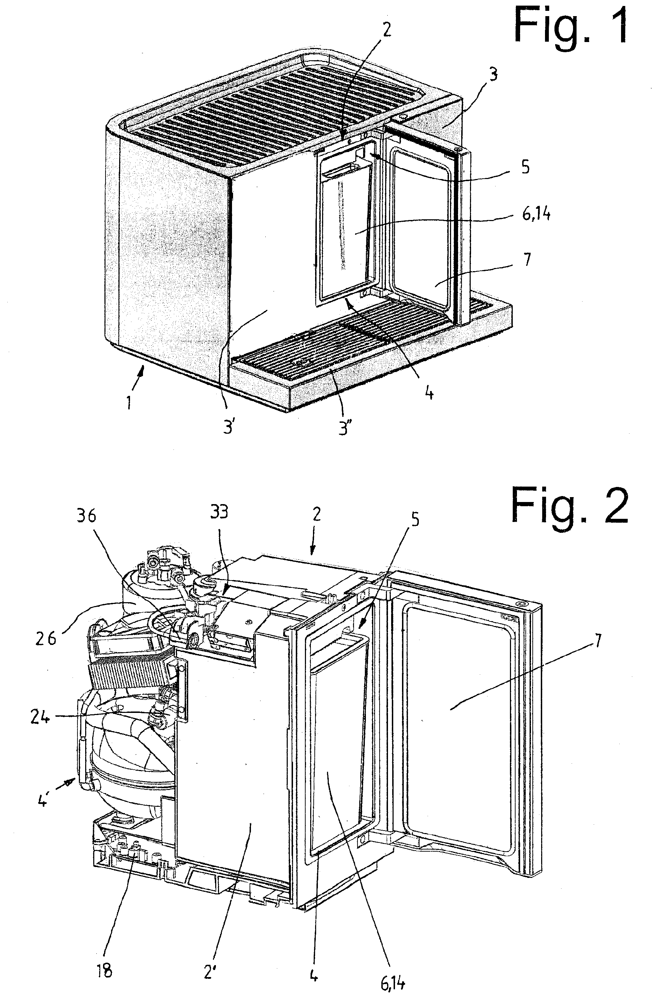

Die in Fig. 1 gezeigte Kaffeemaschine 1 mit einem Gehäuse 3 dient zur automatischen Erzeugung von Kaffee oder kaffeehaltigen Getränken sowie von Mischgetränken aus Kaffee mit Milch oder Milchschaum. Sie besteht aus einem Kaffeemodul zur Erzeugung von Kaffee, von dem nur gerade die Öffnungen 3' in dem Gehäuse 3 zum Einbau desselben veranschaulicht sind, und einem Milchmodul 2 zur Aufbereitung von Milch oder Milchschaum, die unabhängig voneinander in dem gemeinsamen Gehäuse 3 nebeneinander platzsparend einbaubar sind. Das Kaffeemodul 1 besteht an sich aus herkömmlichen Komponenten und ist nicht näher erläutert. Es ist einzig eine Abtropfschale 3" vorderseitig beim Gehäuse 3 gezeigt, auf welche eine Tasse oder dergleichen für das Einfüllen von Kaffee und/oder Milch bzw. Milchschaum stellbar ist.

Das in dem Gehäuse 3 einbaubare Milchmodul 2 ist mit einer Kühlschrankbox 4 ausgestattet, deren Kühlkammer 5 einen Milchbehälter 6 aufnehmen kann. Die optional abschliessbare Kühlkammer 5 ist durch eine an der Vorderseite der Maschine angeordnete Schranktür 7 leicht zugänglich. Dadurch kann nach Öffnen dieser Schranktür 7 der Milchbehälter 6 in die Kühlkammer 5 der Kühlschrankbox 4 hineingestellt oder von ihr entfernt werden. Die Kühlkammer 5 ist so ausgebildet, dass der Milchbehälter 6 annähernd spielfrei in ihr hineinpasst.

Wie aus Fig. 2 ersichtlich ist, ist das Milchmodul 2 erfindungsgemäss als eine unabhängige Einheit ausgebildet, welches eine mit einem Kühlaggregat 4' verbundene Kühlkammer 5 für die Aufnahme des Milchbehälters 6, eine Förderpumpe, einen Boiler 26 zur Erzeugung des Dampfs, eine Einrichtung 24 zum Erhitzen bzw. zum Erzeugen des Milchschaums sowie ein Verbindungsmittel umfasst, durch welches die erhitzte Milch bzw. der erzeugte Milchschaum durch eine Leitung zum Kaffeeauslass bei der Kaffeemaschine förderbar ist.

Ausserdem sind bei diesem Milchmodul 2 eine elektronische Kontrolleinheit 18, nicht näher erläuterte Leitungen und nicht sichtbare Steckerverbindungen an der Rückseite vorgesehen.

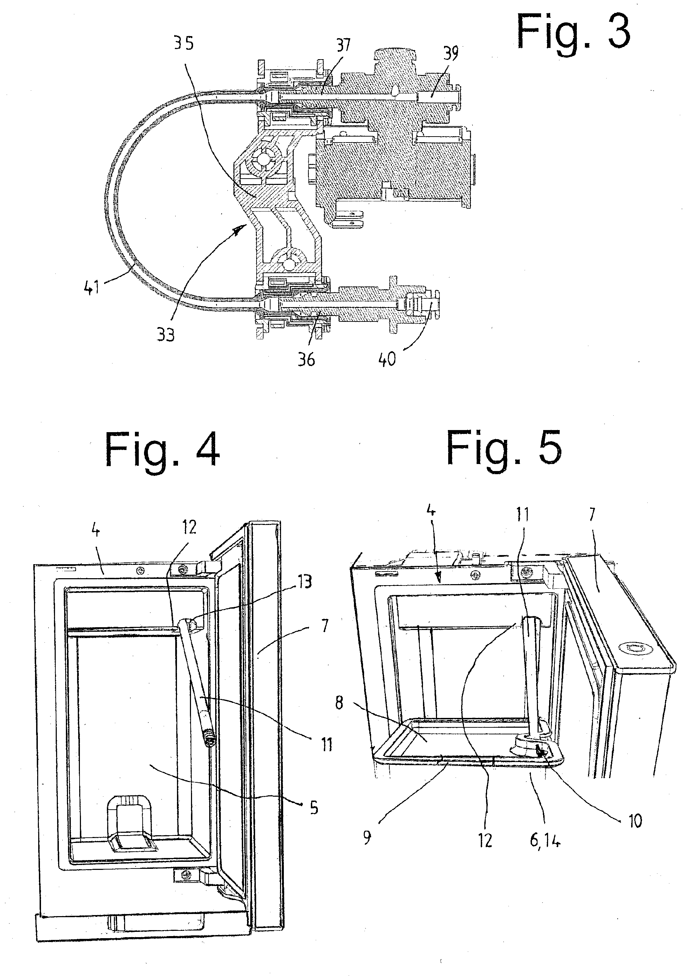

Gemäss Fig. 3 ist das Verbindungsmittel vorteilhaft als eine Steckkupplung 33 mit zwei vorzugsweise achsparallel zueinander angeordneten Steckmuffen 36, 37 gebildet, in welche die Zu- bzw. Ausgangsleitung 39, 40 dichtend und totraumoptimiert einsteckbar sind. Die eine Steckmuffe 36, 37 ist vorstehend zu einem die Kühlschrankbox 4 umgebenden Einschubgehäuse 2' angeordnet, an welche die Ausgangsleitung 40 in der Kaffeemaschine 1 koppelbar ist.

Die Steckkupplung 33 weist ein Verbindungsstück 35 auf, das an beiden Enden mit je einer Steckmuffe 36 bzw. 37 versehen ist, wobei das Verbindungsstück 35 bei dem Gehäuse 3 befestigt ist. Rückseitig sind diese Steckmuffen vorzugsweise mit einem Schlauchbogen 41 verbunden.

Nachdem das Milchmodul in dem Gehäuse 3 eingebaut ist, ist es lediglich erforderlich, die Ausgangsleitung 40 mit der Steckmuffe 36 zu koppeln. Die Steckkupplung 33 zeichnet sich durch einen sehr einfachen Aufbau und eine sichere Handhabung aus. Selbstverständlich können aber hierfür auch andere Kupplungsarten in Frage kommen.

Fig. 4 und Fig. 5 verdeutlichen einen erfindungsgemäss im oberen Bereich der Kühlschrankbox 4 nach vorne bzw. nach hinten schwenkbar gelagerten Ansaugschlauch 11, der frei hängend nach unten ausgerichtet ist,
Der Ansaugschlauch 11 ist durch einen im vorzugsweise oberen Bereich der Kühlschrankbox 4 gelagerten und vorzugsweise manuell betätigbaren Schwenkantrieb 12 drehbar gehalten. Dazu ist bei einer Gelenkstelle 13 des Schwenkantriebs 12 eine Einraststelle vorgesehen, durch diese der Ansaugschlauch 11 bei offenem Kühlschrank nach Entfernen des Milchbehälters 6 aus der Kühlkammer 5 arretiert herausragt. In dieser nach vorne geschwenkten Position 11' kann der Ansaugschlauch von oben in den Milchbehälter 6 bzw. in einen Reinigungsbehälter 14 beim Hineinstellen in die Kühlkammer 5 eingeführt werden, Damit ist dieser Ansaugschlauch platzsparend in der Kühlkammer 5 integriert.

Beim Wiedereinsetzen des Milchbehälters wird der Ansaugschlauch 11 durch die Öffnung 10 des Milchbehälters 4 ohne ihn zu berühren eingeführt. Sobald der Milchbehälter in die Kühlschrankbox 4 hineingestellt ist, ist der Ansaugschlauch wieder nach unten gerichtet, damit er sich mit seinem unteren Ende annähernd bis zum jeweiligen Behälterboden erstreckt. Der Milchbehälter 6 ist ferner durch einen Deckel 8 verschliessbar.

Der Milchbehälter 6 kann im Rahmen der Erfindung durch einen Reinigungsbehälter 14 ausgetauscht werden. Dadurch kann der sonst für den Reinigungsbehälter oder ähnlichem erforderliche zusätzliche Einbauraum eingespart werden und damit ist eine reduzierte Dimensionierung der Kaffeemaschine ermöglicht.

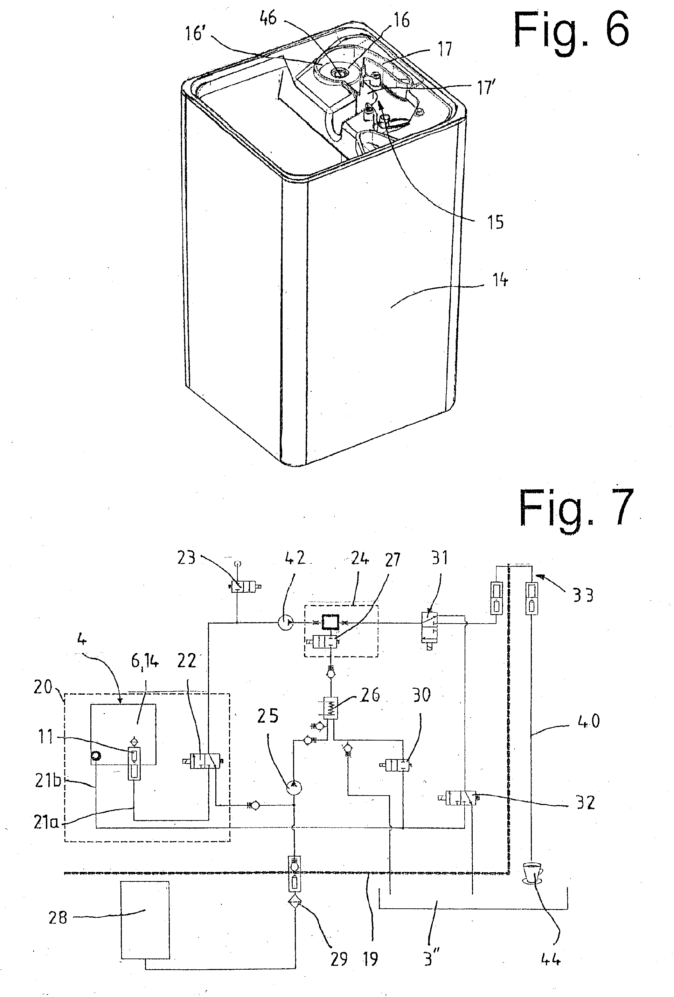

Fig. 6 zeigt einen dafür besonders geeigneten Reinigungsbehälter 14, der vorteilhaft mit derselben Form bzw. Aussenabmessungen wie der Milchbehälter 6 dimensioniert ist. Im Unterschied zu diesem ist aber in diesem Reinigungsbehälter eine Einrichtung 15 mit einem Wasserzufuhrkanal 17, einer definierten Öffnung 16' zur Aufnahme eines Reinigungsmittels und einer Auslassöffnung 17' enthalten.

Zweckmässigerweise ist der im oberen Teil des Behälters angeordnete Wasserzufuhrkanal 17 tangential in diese zylindrisch ausgebildete, von oben zugängliche Öffnung 16' geführt, in welcher zumindest eine Reinigungstablette 16 als lösliches Reinigungsmittels einlegbar ist. Vorzugsweise ist sie ringförmig ausgebildet und mit einer mittleren Bohrung versehen, so dass sie durch den Zentrierstift 46 in der Öffnung 16' annähernd spielfrei positionierbar und detektierbar ist.

Zum Auflösen der Tabletten wird Wasser von der Kühlschrankbox 4 in den Wasserzufuhrkanal 17 tangential auf die Tabletten 16 zugeführt, und das Wasser mit der aufgelösten Tablette läuft durch die Auslassöffnung 17 heraus, sammelt sich im Reinigungsbehälter 14 und wird von dort durch den in den Reinigungsbehälter eingeführten Ansaugschlauch 11 in das Milchmodul geleitet.

Fig. 7 zeigt schematisch den Arbeitskreislauf des Milchmoduls 2, welche durch die gestrichelten Linien 19 abgegrenzt ist. Darin ist die Kühlschrankbox 4 mit dem Milchbehälter 6 bzw. dem Reinigungsbehälter 14 mit gestrichelten Linien 20 verdeutlicht. Für die Milchzufuhr ist der Ansaugschlauch 11 via eine Leitung 21a, ein Zweiwegventil 22, ein Luftansaugventil 23 sowie eine Förderpumpe 42 mit einer Heizkammer der Einrichtung 24 verbunden, wobei letztere für die Dampfzufuhr auch mit dem Boiler 26 und einem Zuschaltventil 27 verbindbar ist. Ein externer Wassertank 28 ist über ein Filter 29 mit dem Boiler 26 via eine Wasserpumpe 25 verbindbar.

Für den periodischen Reinigungsvorgang des Milchmoduls 2 ist der Reinigungsbehälter 14 in die Kühlkammer 5 hineingestellt. Der Ansaugschlauch 11 darin ist an eine Leitung 21b mit den Zweiwegventilen 30 bzw. 32 angeschlossen. Damit können die Heizkammer der Einrichtung 24 und die Förderpumpe 42 mit den zugehörigen Leitungen gespült werden.

Es ist ferner noch die Steckkupplung 33 und die Ausgangsleitung 40 gezeigt, welche zu einer Tasse 44 oder dergleichen auf der Abtropfschale 3" für das Einfüllen von Milch bzw. Milchschaum führt.

Die Erfindung ist mit dem oben erläuterten Ausführungsbeispiel ausreichend dargetan. Sie könnte aber selbstverständlich noch durch andere Varianten offenbart sein. So könnte das Verbindungsmittel zur Weiterleitung der erhitzten Milch bzw. des erzeugten Milchschaums vom Milchmodul zum Auslass bei der Kaffeemaschine anders als durch eine Steckkupplung vorgesehen sein, wie beispielsweise durch eine Schlauchverbindung. Im Prinzip könnte auch beidseitig zum Milchmodul je eine Ausgangsleitung (40) für je ein Kaffeemaschinenmodul vorgesehen sein.

## Patentansprüche

1. Milchmodul zur Erzeugung von Milchschaum oder Milchgetränken, vorzugsweise zum Einbau in eine Kaffeemaschine, mit einem Milchbehälter (6), einer Förderpumpe und einer Einrichtung (24) zum Erhitzen der Milch bzw. zum Erzeugen des Milchschaums oder von sonstigen Milchgetränken, wobei ein Reinigungssystem in dem vorzugsweise als eine unabhängige Einheit ausgebildeten Milchmodul integriert ist, mittels welchem insbesondere durch die Förderpumpe (42), die Einrichtung (24) zum Erhitzen bzw. zum Erzeugen des Milchschaums sowie die Zu- bzw. Ausgangsleitung (39, 40) ein Reinigungsvorgang ermöglicht wird, zu diesem Zwecke anstelle des Milchbehälters (6) ein Reinigungsbehälter (14) mit einem Reinigungsmittel in die Kühlkammer (5) hineinstellbar ist, **dadurch gekennzeichnet, dass** in dem Reinigungsbehälter (14) eine Einrichtung (15) mit einem Wasserzufuhrkanal (17), eine definierte Öffnung (16') zur Aufnahme eines Reinigungsmittels, insbesondere einer Tablette, und eine Auslassöffnung (17') enthalten ist, mittels der Wasser durch diesen Zufuhrkanal (17) in diese Öffnung (16') leitbar und darin das Reinigungsmittel, insbesondere die Tablette, aufgelöst und mit dem Wasser emulgiert via die Auslassöffnung (17') in den Reinigungsbehälter (14) einströmbar ist.

2. Milchmodul nach Anspruch 1, **dadurch gekennzeichnet, dass** der Wasserzufuhrkanal (17) tangential in diese zylindrisch ausgebildete Öffnung (16') geführt ist, in welcher zumindest eine Reinigungstablette (16) als lösliches Reinigungsmittel positionierbar und detektierbar ist.

3. Milchmodul nach Anspruch 1 oder 2, **dadurch gekennzeichnet, dass**
ein im Bereich der Kühlschrankbox (4) nach vorne bzw. nach hinten schwenkbar gelagerter und nach unten frei hängender Ansaugschlauch (11) vorgesehen ist, der in der nach vorne geschwenkten Position (11') von oben in den Milchbehälter (6) bzw. in den Reinigungsbehälter (14) beim Hineinstellen desselben berührungslos einführbar ist.

4. Milchmodul nach Anspruch 3, **dadurch gekennzeichnet, dass**
der Ansaugschlauch (11) durch einen im Bereich der Kühlschrankbox (4) gelagerten und vorzugsweise manuell betätigbaren Schwenkantrieb (12) drehbar ist.

5. Milchmodul nach Anspruch 4, **dadurch gekennzeichnet, dass**
der Schwenkantrieb (12) an seiner Gelenkstelle (13) mit einer Einraststelle versehen ist, in welcher der Ansaugschlauch (11) nach Entfernen des Milchbehälters (6) bzw. des Reinigungsbehälters (14) nach vorne aus der Kühlschrankbox (4) arretiert in einer Position (11') herausragt.

6. Milchmodul nach Anspruch 4 oder 5, **dadurch gekennzeichnet, dass**
der Ansaugschlauch (11) durch den Schwenkantrieb (12) beim Hineinstellen des Milchbehälters (6) bzw. Reinigungsbehälters (14) in die Kühlschrankbox (4) einschwenkt, bis er wieder nach unten gerichtet ist, damit er sich mit seinem unteren Ende annähernd bis zum jeweiligen Behälterboden erstreckt.

7. Milchmodul nach einem der Ansprüche 1 bis 6, **dadurch gekennzeichnet, dass**
das Milchmodul (2) als eine unabhängige Einheit ausgebildet ist und ein Verbindungsmittel umfasst, durch welches die erhitzte Milch bzw. der erzeugte Milchschaum durch wenigstens eine Ausgangsleitung (40) zum Kaffeeauslass bei der Kaffeemaschine förderbar ist.

8. Milchmodul nach Anspruch 7, **dadurch gekennzeichnet, dass**
das Verbindungsmittel durch eine Steckkupplung (33) mit zwei vorzugsweise achsparallel zueinander angeordneten Steckmuffen (36, 37) gebildet ist, in welche die Zu- bzw. Ausgangsleitung (39, 40) dichtend einsteckbar sind.

9. Milchmodul nach Anspruch 8, **dadurch gekennzeichnet, dass**
die eine Steckmuffe (36, 37) vorstehend zu einem die Kühlschrankbox (4) umgebenden Einschubgehäuse (2') angeordnet ist, an welche die Ausgangsleitung (40) in der Kaffeemaschine (1) koppelbar ist.

## Claims

1. A milk module for generating milk foam or milk beverages, preferably for installing into a coffee machine, with a milk container (6), a conveyor pump, and a device (24) for heating milk or for generating the milk foam or other milk beverages, wherein a cleaning system is integrated in the milk module designed as an independent unit, by means of which module a cleaning process is made possible in particular by the conveyor pump (42), the device (24) for heating or for generating the milk foam as well as the input or output line (39, 40), for this purpose, instead of the milk container (6), a cleaning container (14) with a cleaning agent can be inserted into the cooling chamber (5), **characterised in that**
a device (15) with a water supply channel (17), a defined opening (16') for receiving a cleaning agent, in particular a tablet, and an outlet opening (17') is contained in the cleaning container (14), by means of which water can be guided through this supply channel (17) into this opening (16') and into which the cleaning agent, in particular the tablet, is dissolved and can flow into the cleaning container (14), emulsified with the water, via the outlet opening (17').

2. The milk module according to claim 1, **characterised in that**
the water supply channel (17) is guided tangentially into this cylindrical opening (16'), in which at least one cleaning tablet (16) can be positioned and detected as soluble cleaning agent.

3. The milk module according to claim 1 or 2, **characterised in that**
a suction hose (11) is provided in the region of the cool box (4), which hose is housed pivotable forwards or backwards, and hanging freely downwards, and which hose can be inserted contactlessly in the forward-pivoted position (11') from the top into the milk container (6) or into the cleaning container (14) when inserting same.

4. The milk module according to claim 3, **characterised in that**
the suction hose (11) can be rotated by a swivel drive (12) which can be housed in the region of the cool box (4) and actuated preferably manually.

5. The milk module according to claim 4, **characterised in that**
the swivel drive (12) is provided on its joint (13) with a detent position in which, after removing the milk container (6) or the cleaning container (14) forwards out of the cool box (4), the suction hose (11) projects locked in one position (11').

6. The milk module according to claim 4 or 5, **characterised in that**,
when inserting the milk container (6) or cleaning container (14) into the cool box (4), the suction hose (11) pivots due to the swivel drive (12) until it is again directed downwards, in order that it extends with its bottom end approximately as far as the respective bottom of the container.

7. The milk module according to one of claims 1 to 6, **characterised in that**
the milk module (2) is designed as an independent unit and comprises a connection means, by which the heated milk or the generated milk foam can be conveyed through at least one discharge line (40) to the coffee outlet in the coffee machine.

8. The milk module according to claim 7, **characterised in that**
the connection means is formed by a socket attachment (33) with two sliding socket joints (36, 37) arranged preferably axially parallel to one another, into which the input or output line (39, 40) are inserted in sealing manner.

9. The milk module according to claim 8, **characterised in that**
the one sliding socket joint (36, 37) is arranged projecting to a rack (2') surrounding the cool box (4), to which socket joint the output line (40) in the coffee machine (1) can be coupled.

## Revendications

1. Module de lait pour la production de mousse de lait ou de boissons lactées, à monter de préférence dans une machine à café, comprenant un récipient (6) à lait, une pompe de circulation et un dispositif (24) de chauffage du lait ou de production de la mousse de lait ou d'autres boissons lactées, dans lequel un système de nettoyage est intégré dans le module de lait, constitué de préférence sous la forme d'une unité indépendante, système au moyen duquel, en particulier par la pompe (42) de circulation, le dispositif (24) de chauffage ou de production de la mousse de lait ainsi que des conduits (39, 40) d'arrivée et de sortie, une opération de nettoyage est rendue possible, à cette fin, au lieu du récipient (6) à lait, un récipient (14) de nettoyage ayant un agent de nettoyage peut être mis dans la chambre (5) de refroidissement, **caractérisé en ce que**, dans le récipient (14) de nettoyage, est contenu un dispositif (15) ayant un conduit (17) d'apport d'eau, une ouverture (16') définie de réception d'un agent de nettoyage, en particulier d'une tablette, et une ouverture (17') de sortie, au moyen de laquelle de l'eau peut être conduite, par ce conduit (17) d'apport, dans cette ouverture (16') et l'agent de nettoyage, en particulier la tablette, peut y être dissout et peut, en étant émulsionné par l'eau, par l'intermédiaire de l'ouverture (17') de sortie, entrer dans le récipient (14) de nettoyage.

2. Module de lait suivant la revendication 1, **caractérisé en ce que**
le conduit (17) d'apport d'eau passe tangentiellement dans cette ouverture (16') de constitution cylindrique, dans laquelle au moins une tablette (16) de nettoyage, comme agent de nettoyage soluble, peut être mise en position et détectée.

3. Module de lait suivant la revendication 1 ou 2, **caractérisé en ce que**,
dans la partie de l'armoire (4) du réfrigérateur, est prévu, monté pivotant vers l'avant ou vers l'arrière et pendant librement vers le bas, un conduit (11) souple d'aspiration, qui, dans la position (11') pivotée vers l'avant, peut être introduit par le haut dans le récipient (6) à lait ou dans le récipient (14) de nettoyage sans contact lors de son introduction.

4. Module de lait suivant la revendication 3, **caractérisé en ce que**
le conduit (11) souple d'aspiration peut tourner par un entraînement (12) en pivotement, monté dans la partie de la partie de l'armoire (4) du réfrigérateur et pouvant être actionné, de préférence manuellement.

5. Module de lait suivant la revendication 4, **caractérisé en ce que**
l'entraînement (12) pivotant est pourvu, en son point (13) d'articulation, d'un point d'encliquetage, dans lequel le conduit (11) souple d'aspiration fait, après retrait du récipient (6) à lait ou du récipient (14) de nettoyage, saillie vers l'avant de l'armoire (4) du réfrigérateur en étant bloqué en une position (11').

6. Module de lait suivant la revendication 4 ou 5, **caractérisé en ce que**
le conduit (11) souple d'aspiration peut, par l'entraînement (12) en pivotement, lors de l'introduction du récipient (6) à lait ou du récipient (14) de nettoyage dans l'armoire (4) du réfrigérateur, pivoter jusqu'à être dirigé à nouveau vers le bas, afin de s'étendre, par son extrémité inférieure, à peu près jusqu'au fond du récipient respectif.

7. Module de lait suivant l'une des revendications 1 à 6, **caractérisé en ce que**
le module (2) de lait est constitué sous la forme d'une unité indépendante et comprend un moyen de raccordement, par lequel le lait chauffé ou la mousse de lait produite peut être transporté par au moins un conduit (40) de sortie à la sortie du café de la machine à café.

8. Module de lait suivant la revendication 7, **caractérisé en ce que**
le moyen de raccordement est formé d'un raccordement (33) à enfichage ayant deux manchons (36, 37) d'enfichage, montés de préférence en ayant leurs axes parallèles entre eux, dans lesquels les conduits (39, 40) d'arrivée et de sortie peuvent être enfichés d'une manière étanche.

9. Module de lait suivant la revendication 8, **caractérisé en ce que**
l'un des manchons (36, 37) d'enfichage est disposé devant un boîtier (2') insérable, qui entoure l'armoire (4) du réfrigérateur, manchon auquel le conduit (40) de sortie dans la machine (1) à café peut être raccordé.
